# EUROPEAN PATENT APPLICATION

(11) **EP 0 916 906 A2**
(43) Date of publication of application: **19.05.1999**
(21) Application number: 98850173.0
(22) Date of filing: 09.11.1998
(51) Int. Cl.: F24F 13/24, F16L 55/033

(54) **A sound absorber for ventilation ducts**

(30) Priority: 10.11.1997 SE 9704090
(71) Applicant: Stifab Farex AB, 671 29 Arvika (SE)
(72) Inventor: Tiger, Jonas, 671 33 Arvika (SE)
(74) Representative: Lundin, Björn-Eric

(57) **Abstract**

The present invention relates to a sound absorber (10) having baffles (11, 12, 13) for rectangular ventilation ducts (17). The sound absorber includes two side-baffles (11, 12), one or more centre baffles (13), a top part (14) and a bottom part (15). The baffles (11, 12, 13) stand on the bottom part (15) and are covered by the top part (14) and joined to said top and bottom part (14, 15) such that the baffles (11, 12, 13) form together with said top and bottom parts (14, 15) a coherent unit. The outer side-surfaces of the side-baffles (11, 12) and the top and bottom parts (13, 14) together form the absorber casing or cowling. The baffles (11, 12, 13) are preferably removably fitted in the top and bottom parts (14, 15). The outer surfaces of the side-baffles (11, 12) are conveniently covered with the same material as that used with the top and bottom parts (14, 15) preferably galvanised metal sheet. The side-baffles (11, 12) can be adapted for in-drawn connection of the sound absorber (10) to the ventilation duct (17).

## Description

The present invention relates to a sound absorber or sound attenuator that includes baffles for rectangular ventilation ducts.

Sound absorbers for rectangular ventilation ducts are known to the art and are at present retailed in many different forms. An example of one such sound absorber is the so-called Multidämparen® described in our catalogue referenced PZGa. A common feature of these known sound absorbers is that they are intended to prevent sound generated by a fan or blower system from propagating in associated ventilation systems to the best possible extent and are therefore placed close to the fan system and connected to the rectangular ducts of the ventilation system departing from the fans. These sound absorbers include a plurality of sound-absorbing baffles which include insulating material that has sound-absorbing properties. The baffles are disposed in the longitudinal direction of the sound absorber, this direction being the same as the direction of the ventilation duct and therewith corresponds to the flow direction of the ventilation air, which thus flows transversely through the absorber in its longitudinal direction. The baffles are mounted in and surrounded by a cowling or wrap which may be of galvanised metal sheet and which encloses all baffles and also normally forms an outer casing for the sound absorber.

One requirement of such sound absorbers is that they give the best possible sound-absorbing effect for a given volume of insulating material. In order to achieve optimum use of a sound absorber, it is therefore necessary to adapt the sound absorber to the application concerned, for instance its width and disposable place longitudinally, and to ensure that the absorber is correctly dimensioned with respect to desired sound attenuation in dB, and also to adapt the absorber with respect to the acoustic properties of the insulating material, the thickness of the baffles, the width of the gaps between mutually adjacent baffles, the length of the baffles and the appearance and properties of the surface covering.

Another requirement of such sound absorbers is that they do not cause excessively large pressure drops in the flow direction. Consequently, the majority of known sound absorbers are designed with the intention of minimising such pressure drops. For instance, a low pressure drop will enable
- the space required for the absorber to be reduced, because a smaller absorber can be used;
- the pressure set-up in the fan system can be reduced with the same fan size;
- self-induced sound in the system to be reduced with lower air flow-rates and lower pressure set-ups; and
- the absorber can be adapted more readily to the adjacent duct system.

When seen against this background, it will be realised that it is necessary to be able to supply a sound absorber of the kind described in the introduction in many different sizes and in many different makes with respect to baffle width, gap width, cowling dimensions and insulating layer properties. These circumstances naturally influence manufacturing costs, since the number of each sound absorber variant to be produced on each occasion is often very small.

An object of the present invention is to provide a sound absorber, or sound attenuator, for ventilation ducts with which essentially all of the drawbacks of conventional sound absorbers have been eliminated in a simple, neat and effective manner.

Accordingly, the inventive sound absorber is characterised by the features set forth in the following Claims. The sound absorber thus includes two side-baffles, one or more centre baffles, an upper part or cover, and a bottom part. The term "centre baffles" as used here includes all baffles located between the two side-baffles. The baffles stand on the bottom part and are covered by the top part and are mounted in said parts so as to form a coherent unit together with said top and bottom parts. The outer side-surfaces of the side-baffles and the top and bottom parts thus form together the casing or cowling of the sound absorber. The inventive sound absorber does not therefore require a separate cowling or wrap, and a desired number of baffles of predetermined dimensions can be fitted in accordance with local requirements. Side-baffles, centre-baffles and cover can be combined in a simple way that reduces the need of manufacturing a wealth of absorber-types and absorber-sizes.

If desired, the baffles may be removably fitted in the top and bottom parts or can be fitted in some other way, for instance spot-welded or riveted thereto

The outer surfaces of the side-baffles may conveniently be covered with the same type of material as that used in respect of the top and bottom parts, preferably galvanised sheet metal. If desired, the side-baffles may be adapted for in-drawn connection of the sound absorber to the ventilation duct, in which case said baffles will protrude outside the connecting duct-walls. Such an in-drawn connection enables the pressure drop across the sound absorber to be further reduced, since the air flow need not be throttled when passing the sound absorber, or at least need only be throttled to a lesser extent than when said side-baffles are placed inwardly of the extension of the channel walls and therewith reduce the duct area through the sound absorber.

The centre baffles in the sound absorber may conveniently have the form of baffles described in our Patent Application No. 9704006-7 relating to "Baffles for Sound Absorbers", and said side-baffles can be made as "half" baffles of said type, also referred to here as whole baffles and half baffles respectively.

The invention will now be described with reference to the accompanying drawings, in which Figure 1 is a perspective view of an inventive sound absorber 10, said Figure being in the form of a general assembly drawing for better illustration; Figure 2 illustrates a second embodiment of the invention and shows a sound absorber with an in-drawn connection; Figure 3 illustrates an assembled sound absorber; and Figure 4 illustrates in perspective one such sound absorber, where adjacent ventilation ducts have also been indicated.

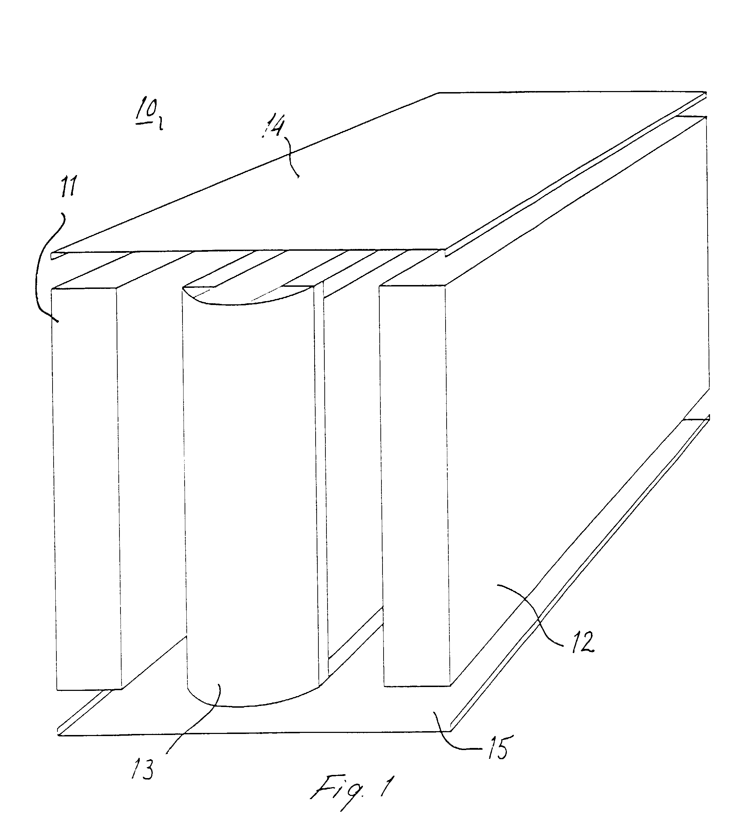

Figure 1 illustrates a sound absorber 10 intended for rectangular ventilation ducts, and shows the sound absorber prior to its assembly. The illustrated sound absorber is comprised of two sound-absorbing side-baffles 11, 12 of the so-called half-baffle type, and one or more centre baffles 13 of the whole-baffle type. The sound absorber also includes a top part 14 and a bottom part 15 made of metal sheet, suitably galvanised metal sheet, which together can also be called a lid or cover. The baffles include sound-absorbing, insulating material, for instance mineral fibre wool in sheet form.

In manufacture, covers of suitable size are selected and the desired number of baffles are disposed on and fastened to the cover by riveting, screwing, spot-welding or like methods. Alternatively, the sound absorber may be delivered in the form of an assembly kit that may include covers and whole and half baffles of different dimensions, such as to enable the sound absorber to be assembled in connection with the final installation. The sound absorber 10 may simply be comprised of different whole-baffle types of standard sizes and corresponding half-baffles, to obtain the intended function and dimensions, where actually only the covers need be especially manufactured when no standard cover will fit the sound absorber or is desired. One or more baffles may be used in the vertical direction.

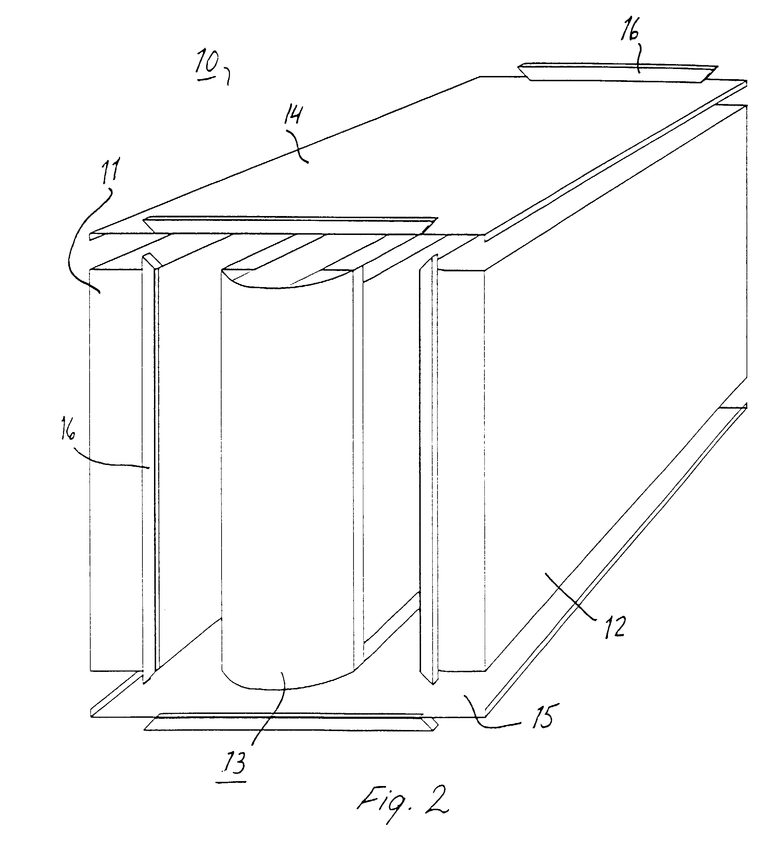

Figure 2 shows a sound absorber 10 according to Figure 1 but with parts of connecting means 16 for in-drawn connection arranged in both side-baffles 11, 12 and in the covers 13, 14 in both the outwardly and the inwardly facing ends thereof.

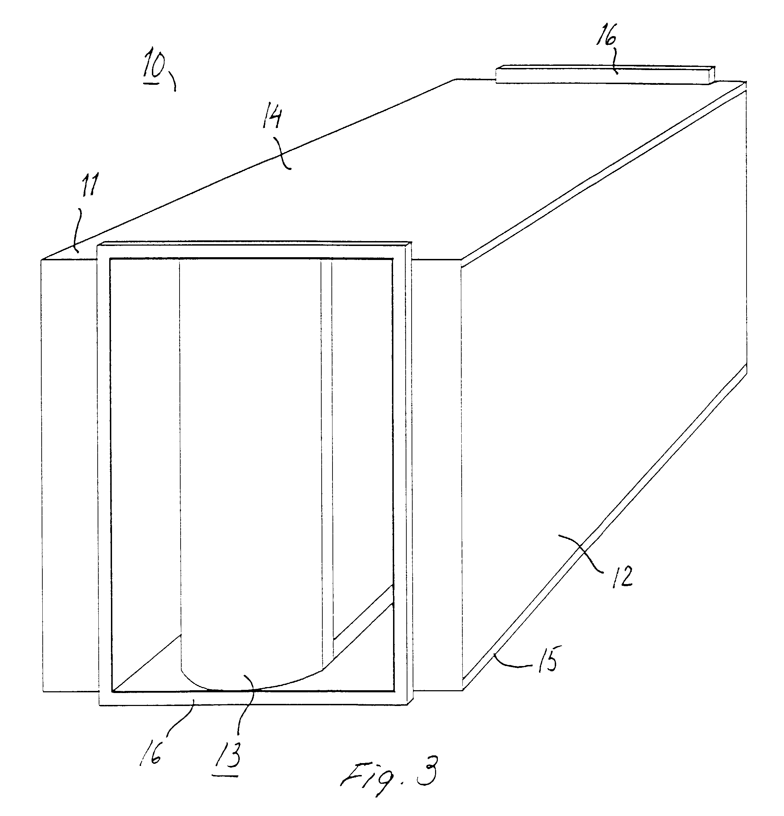

Figure 3 shows the same sound absorber 10 in an assembled state, where the individual parts of the connecting means now form fitted connecting means 16 in both ends of the sound absorber 10.

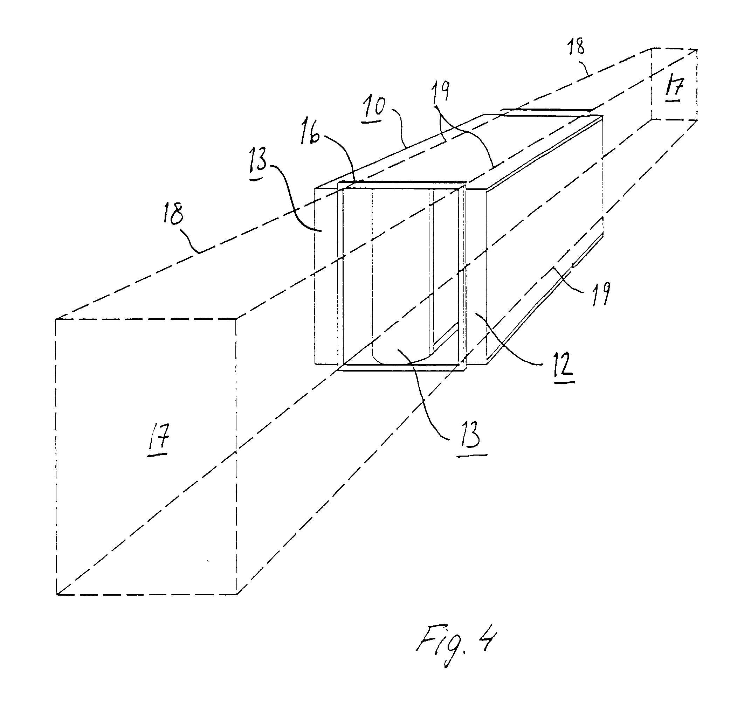

Figure 4 illustrates a sound absorber 10 mounted with in-drawn connection to a ventilation duct 17. The sound absorber 10 includes side-baffles 11, 12 at least partially placed outside the air-flow area in the ventilation duct 17, i.e. outside the fictive lines 19 drawn between the outer defining lines 18 of the ventilation ducts 17. The sound absorber 10 is connected to each duct 17 on both sides with the aid of connecting means 16 which may have the form of guides. As a result of the illustrated in-drawn connection, the pressure drop at the junctions between the sound absorber 10 and the duct 17 will be the smallest possible, since air is able to pass these junctions and through the sound absorber 10 in the absence of any change in flow caused by changes in the dimension of the flow area. One or more whole centre-baffles 13 are located between the side-baffles 11, 12, although only the position of one such centre baffle 13 has been shown.

The invention provides many advantages, of which a few are mentioned below:
- a module system with loose whole baffles, half baffles and covers that can be combined in many different ways to suit the application concerned;
- simple to fit and handle;
- can be delivered in the form of an assembly kit, because assembly is simple to achieve;
- assembly-kit supply means simpler packaging and smaller volumes with respect to transportation; and
- air need not be transported to the same extent as earlier.

## Claims

1. A sound absorber (10) including baffles (11, 12,13) for rectangular ventilation ducts (17), **characterised** in that the sound absorber includes two side-baffles (11, 12), one or more centre-baffles (13), a top part (14) and a bottom part (15), wherein the baffles (11, 12, 13) stand on the bottom part (15) and are covered by the top part (14) and are joined to said top and bottom parts (14, 15) in a manner such that said baffles (11, 12, 13) and said top and bottom parts (14, 15) together form a coherent unit, wherein the outer side surfaces of the side-baffles (11, 12) and the top and bottom parts (13, 14) together form the sound absorber casing or cowling.

2. A sound absorber (10) according to Claim 1, **characterised** in that the baffles (11, 12, 13) are removably fitted in said top and bottom parts (14, 15).

3. A sound absorber (10) according to Claims 1-2, **characterised** in that the outer surfaces of the side-baffles (11, 12) are covered with the same type of material as that used to cover the top and bottom parts (14, 15), preferably galvanised metal sheet.

4. A sound absorber (10) according to Claims 1-3, **characterised** in that the side-baffles (11, 12) are adapted for in-drawn connection of the sound absorber (10) to the ventilation duct (17).
